# EUROPEAN PATENT SPECIFICATION

(11) **EP 1 432 232 B1**
(45) Date of publication and mention of the grant of the patent: **16.03.2011**
(21) Application number: 03078904.4
(22) Date of filing: 08.12.2003
(51) Int. Cl.: H04N 1/21, H04N 1/00

(54) **Image metadata processing system and method**
Gerät und Verfahren zur Verarbeitung von Bildmetadaten
Appareil et procédé de traitement de métadonnées d'image

(30) Priority: 20.12.2002 US 324457
(43) Date of publication of application: 23.06.2004
(73) Proprietor: Eastman Kodak Company, Rochester, NY 14650-2201 (US)
(72) Inventor: Zacks, Carolyn A., c/o Eastman Kodak Company, Rochester, New York 14650-2201 (US); Telek, Michael J., c/o Eastman Kodak Company, Rochester, New York 14650-2201 (US); Marino, Frank, c/o Eastman Kodak Company, Rochester, New York 14650-2201 (US); Taxier, Karen M., c/o Eastman Kodak Company, Rochester, New York 14650-2201 (US); Harel, Dan, c/o Eastman Kodak Company, Rochester, New York 14650-2201 (US)
(74) Representative: Weber, Etienne Nicolas

(56) References cited:
- US-A1- 2002 088 000
- US-A1- 2002 174 236
- US-B1- 6 253 203
- DIGITAL IMAGING GROUP: "DIG35-METADATA FOR DIGITAL IMAGES" 6 March 2000 (2000-03-06), , XP001131278 * page 73 *

## Description

The present invention relates to image metadata processing systems.

One popular aspect of digital still and motion images, referred to herein collectively as digital images, is the ease and immediacy with which such images can be shared. Commonly digital still and motion images are transmitted from place to place by way of the internet, wired and wireless telecommunication networks and other such electronic communication media. Transmitting images using such mediums allows digital images to be rapidly sent to others across large distances.

Another popular aspect of digital images is that they can easily be associated with data that provides additional information. There is a wide variety of such data. This data can be used to increase the quality and utility of digital images. For example, image processing algorithms exist that use data concerning the way in which the image was captured to improve the appearance of the image. Examples of such data include camera settings, the distance between the camera and the subject, and/or whether a flash was discharged. In addition, data concerning the image can be used to facilitate communication between a photographer or other interested persons such as the photographic subject and a photofinisher allowing the photographer or other interested persons to identify the number and type of prints of the image to be produced by the photofinisher. Further, digital images become more useful to a user when the digital images are associated with data indicating the date, time, location and subject of the digital images, thus permitting a user to more quickly locate an image of interest. Digital images can also be made more useful to a user where the images are associated with multimedia data such as audio and other information.

Information of this type is known as metadata. Metadata is a term that is used to describe any data that is associated with a digital image. The most convenient and effective way to gather and associate metadata with a digital image is to automatically gather and associate the metadata with the digital image when the digital image is captured.

A number of systems for accomplishing this result have been developed. Two of these systems have involved recording metadata magnetically on a magnetic recording layer of a photographic filmstrip and recording metadata optically on a photosensitive layer of a photographic filmstrip, these systems are the DATAKODE system developed by Eastman Kodak Company, Rochester New York, U.S.A. for motion picture films and the Advanced Photographic System, developed for consumer still image films. When images captured on such film based systems are converted into digital form, the metadata can be read from the film and stored along with the converted digital images.

Commonly digital cameras, digital film scanning systems and digital print scanning systems generate metadata in the form of digital data that can be stored in association with digital images. Various digital image data formats have been developed to help preserve metadata within digital images. For example, metadata can be recorded as a Tagged Image File Format tag in the Exchangeable Image File Format version 2.2 published by the Japan Electronics and Information Technology Industries Association JEITA CP-3451, or in accordance with the DIG35 specification entitled "Metadata for Digital Images", version 1.0, published by The Digital Imaging Group, Inc. on August 30, 2000. Alternatively, a digital image can be processed so that metadata is encoded in visible or invisible patterns such as text, symbols, fiducials, and watermarks.

Metadata can also be generated after capture. For example where a digital image is based upon a scanned print, or film negative, metadata can be generated that describes the way in which the film was photofinished or processed, or that identifies equipment used to scan the film image. Further, many digital images also contain metadata such as titles, editing fiducials, descriptions, titles, indexing and albuming information, chain of transfer information, edit tracking and other information, that are incorporated into the digital image after capture as the digital image is used, processed and transmitted.

While such metadata can be particularly useful for image processing, indexing, print rendering, and many other purposes, many picture takers may not want the image metadata to be shared with all receivers because of privacy, security, and other considerations.
Computer programs are known that extract metadata from a digital file such as a text document generated using popular word processing and presentation software. One example of such software is "Out-Of-Sight" software provided by Soft Wise Corporation, Lexington, New York, U.S.A. The "Out-Of-Sight" software permits a user to identify a document and selectively or automatically excise all metadata within the document so that the document can be transmitted without risk of unintentionally sharing metadata. Further, various systems are known in which metadata is managed in a manner that allows certain users of the database to receive more access to mage metadata than other users. However, utilization of such systems requires first that all metadata be provided to the database. This creates two risks, a risk that the metadata will be unwittingly or erroneously shared during transport from a source such as a digital camera, and a risk that controls will be improperly executed at the server. Examples of this include, but are not limited to, U.S. Application Publication Nos. US-A-2002/088000, 2002/174236 and, U.S. Patent No. US-B-6,253,203. Further, many image processing programs and algorithms will automatically destroy metadata when they modify images as a part of the image manipulation process.

While useful for their intended purpose, such programs are executed in a manual fashion requiring a user's involvement in the process of extracting metadata from each transmitted image. This involvement can be tedious, particularly where a single image is to be transmitted to multiple users. Further, as it is becoming increasingly common for digital images to be captured and immediately shared by a photographer using wireless communication systems, a photographer may not have the time or the ability to remotely execute such programs on an image-by-image and receiver-by-receiver basis. As a result, many users assume the risk attendant with the uncensored transmission of such metadata.

Thus, what is needed is metadata processing system and method that automatically controls the metadata that is associated with an image so that such metadata is not unintentionally transmitted to others.

In accordance with the invention as set out in the claims, what is provided is a method for processing image metadata at a digital camera for an image to be transmitted to a receiver. In accordance with the method, metadata access privileges are determined for the receiver and receiver metadata is derived from the image metadata based upon the metadata access privileges for the receiver. The receiver metadata is associated with the image.
Fig. 1 shows one embodiment of a metadata processing system of the present invention.
Fig. 2 shows a back view of the embodiment of Fig. 1.
Fig. 3 shows a flow diagram of a profile entry process.
Fig. 4 shows a flow diagram of one embodiment of a method for managing metadata in accordance with the present invention
Fig. 5 illustrates the operation of the method of Fig. 4.

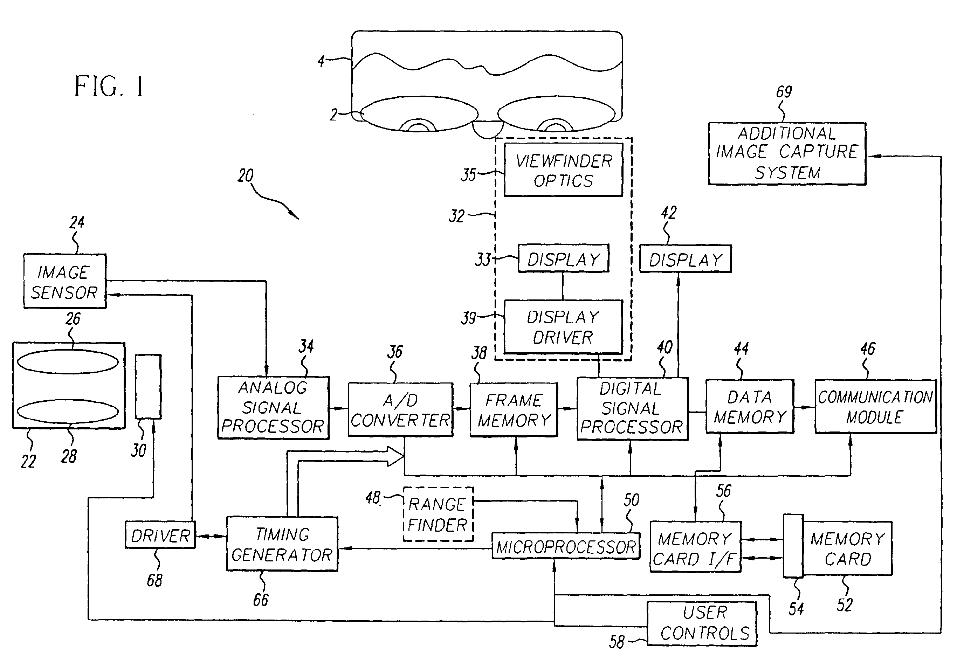

Fig. 1 shows a block diagram of an embodiment of a processing system 20 adapted to process image metadata in accordance with the present invention. As is shown in Fig. 1, processing system 20 includes a taking lens unit 22, which directs light from a subject (not shown) to form an image on an image sensor 24.

The taking lens unit 22 can be simple, such as having a single focal length with manual focusing or a fixed focus. In the example embodiment shown in Fig. 1, taking lens unit 22 is a motorized 2x zoom lens unit in which a mobile element or combination of elements 26 are driven, relative to a stationary element or combination of elements 28 by lens driver 30. Lens driver 30 controls both the lens focal length and the lens focus position. A viewfinder system 32 presents images captured by image sensor 24 to user 4 to help user 4 to compose images. The operation of viewfinder system 32 will be described in detail below.

Various methods can be used to determine the focus settings of the taking lens unit 22. In a preferred embodiment, image sensor 24 is used to provide multi-spot autofocus using what is called the "through focus" or "whole way scanning" approach. The scene is divided into a grid of regions or spots, and the optimum focus distance is determined for each image region. The optimum focus distance for each region is determined by moving taking lens unit 22 through a range of focus distance positions, from the near focus distance to the infinity position, while capturing images. Depending on the camera design, between four and thirty-two images may need to be captured at different focus distances. Typically, capturing images at eight different distances provides suitable accuracy.

The captured image data is then analyzed to determine the optimum focus distance for each image region. This analysis begins by band-pass filtering the sensor signal using one or more filters, as described in commonly assigned U.S. Patent No. US-A-5,874,994 "Filter Employing Arithmetic Operations for an Electronic Synchronized Digital Camera" filed by Xie et al., on December 11, 1995. The absolute value of the bandpass filter output for each image region is then peak detected, in order to determine a focus value for that image region, at that focus distance. After the focus values for each image region are determined for each captured focus distance position, the optimum focus distances for each image region can be determined by selecting the captured focus distance that provides the maximum focus value, or by estimating an intermediate distance value, between the two measured captured focus distances which provided the two largest focus values, using various interpolation techniques.

The lens focus distance to be used to capture the final high-resolution still image can now be determined. In a preferred embodiment, the image regions corresponding to a target object (e.g. a person being photographed) are determined. The focus position is then set to provide the best focus for these image regions. For example, an image of a scene can be divided into a plurality of sub-divisions. A focus evaluation value representative of the high frequency component contained in each subdivision of the image can be determined and the focus evaluation values can be used to determine object distances as described in commonly assigned U.S. Patent No. US-A-5,877,809 entitled "Method Of Automatic Object Detection In An Image", filed by Omata et al. on October 15, 1996. If the target object is moving, object tracking may be performed, as described in commonly assigned
U.S. Patent No. US-A-6,067,114 entitled "Detecting Compositional Change in Image" filed by Omata et al. on October 26, 1996. In an alternative embodiment, the focus values determined by "whole way scanning" are used to set a rough focus position, which is refined using a fine focus mode, as described in commonly assigned U.S. Patent No. US-A-5,715,483, entitled "Automatic Focusing Apparatus and Method", filed by Omata et al. on October 11, 1998.

In one embodiment, the bandpass filtering and other calculations used to provide autofocus in processing system 20 are performed by digital signal processor 40. In this embodiment, processing system 20 uses a specially adapted image sensor 24, as is shown in commonly assigned U.S. Patent No. US-A-5,668,597 entitled "Electronic Camera With Rapid Autofocus Upon An Interline Image Sensor", filed by Parulski et al. on December 30, 1994, to automatically set the lens focus position. As described in the '597 patent, only some of the lines of sensor photoelements (e.g. only ¼ of the lines) are used to determine the focus. The other lines are eliminated during the sensor readout process. This reduces the sensor readout time, thus shortening the time required to focus taking lens unit 22.

In an alternative embodiment, processing system 20 uses a separate optical or other type (e.g. ultrasonic) of rangefinder 48 to identify the subject of the image and to select a focus position for taking lens unit 22 that is appropriate for the distance to the subject. Rangefinder 48 can operate lens driver 30, directly or as is shown in the embodiment of Fig. 1. Rangefinder 48 can provide data to microprocessor 50 that uses information from rangefinder 48 to move one or more mobile elements 26 of taking lens unit 22. Rangefinder 48 can be passive or active or a combination of the two. A wide variety of suitable multiple sensor rangefinders 48 known to those of skill in the art are suitable for use. For example, U.S. Patent No. US-A-5,440,369 entitled "Compact Camera With Automatic Focal Length Dependent Exposure Adjustments" filed by Tabata et al. on November 30, 1993, discloses such a rangefinder 48.

In the embodiment shown in Fig. 1, a feedback loop is established between lens driver 30 and microprocessor 50 so that microprocessor 50 can accurately set the focus position of taking lens unit 22. The focus determination provided by rangefinder 48 can be of the single-spot or multi-spot type. Preferably, the focus determination uses multiple spots. In multi-spot focus determination, the scene is divided into a grid of regions or spots, and the optimum focus distance is determined for each spot.

Image sensor 24 has a discrete number of photosensitive elements arranged in a two-dimensional array. Each individual photosite on image sensor 24 corresponds to one pixel of the captured digital image, referred to herein as an initial image. Image sensor 24 can be a conventional charge coupled device (CCD) sensor, a complementary metal oxide semiconductor image sensor and/or a charge injection device. In one example embodiment, image sensor 24 has an array of 1280 x 960 photosensitive elements. The photosensitive elements, or photosites, of image sensor 24 convert photons of light from the scene into electron charge packets. Each photosite is overlaid with a color filter array, such as the Bayer color filter array described in commonly assigned U.S. Patent No. US-A-3, 971,065, entitled "Color Imaging Array" filed by Bayer on March 7, 1975. The Bayer color filter array has 50% green pixels in a checkerboard mosaic, with the remaining pixels alternating between red and blue rows. The photosites respond to the appropriately colored incident light illumination to provide an analog signal corresponding to the intensity of illumination incident on the photosites. Various other color filters can be used. A color filter can be omitted where image sensor 24 is used to capture gray scale or so-called black and white images.

The analog output of each pixel is amplified by an analog amplifier (not shown) and is analog processed by an analog signal processor 34 to reduce the output amplifier noise of image sensor 24. The output of analog signal processor 34 is converted to a captured digital image signal by an analog-to-digital (A/D) converter 36, such as, for example, a 10-bit A/D converter that provides a 10 bit signal in the sequence of the Bayer color filter array.

The digitized image signal is temporarily stored in a frame memory 38, and is then processed using a programmable digital signal processor 40 as described in commonly assigned U.S. Patent No. US-A-5,016,107 filed by Sasson et al. on May 9, 1989, entitled "Electronic Still Camera Utilizing Image Compression and Digital Storage". The image processing includes an interpolation algorithm to reconstruct a full resolution color image from the color filter array pixel values using, for example, the methods described in commonly assigned U.S. Patent Nos. US-A-5,373,322 entitled "Apparatus and Method for Adaptively Interpolating a Full Color Image Utilizing Chrominance Gradients" filed by LaRoche et al. on June 30, 1993, and US-A-4,642,678 entitled "Signal Processing Method and Apparatus for Producing Interpolated Chrominance Values in a Sampled Color Image Signal" filed by Cok on February 3, 1986. White balance, which corrects for the scene illuminant, is performed by multiplying the red and blue signals by a correction factor so that they equal green for neutral (i.e. white or gray) objects. Preferably, color correction uses a 3x3 matrix to correct the camera spectral sensitivities. However, other color correction schemes can be used. Tone correction uses a set of look-up tables to provide the opto-electronic transfer characteristic defined in the International Telecommunication Union standard ITU-R BT.709. Image sharpening, achieved by spatial filters, compensates for lens blur and provides a subjectively sharper image. Luminance and chrominance signals are formed from the processed red, green, and blue signals using the equations defined in ITU-R BT.709.

Digital signal processor 40 uses the initial images to create archival images of the scene. Archival images are typically high resolution images suitable for storage, reproduction, and sharing. Archival images are optionally compressed using the JPEG (Joint Photographic Experts Group) ISO 10918-1 (ITU - T.81). standard and stored in a data memory 44. The JPEG compression standard uses the well-known discrete cosine transform to transform 8 x 8 blocks of luminance and chrominance signals into the spatial frequency domain. These discrete cosine transform coefficients are then quantized and entropy coded to produce JPEG compressed image data. This JPEG compressed image data is stored using the so-called "Exif" image format defined in Exchangeable Image File Format version 2.2 published by the Japan Electronics and Information Technology Industries Association JEITA CP-3451. The Exif format archival image can also be stored in a memory card 52. In the embodiment of Fig. 1, processing system 20 is shown having a memory card slot 54 that holds a removable memory card 52 and has a memory card interface 56 for communicating with memory card 52. An Exif format archival image and any other digital data can also be transmitted to a host computer (not shown), which is connected to processing system 20 through a communication module 46. Communication module 46 can be for example, an optical, radio frequency or other transducer that converts image and other data into a form that can be conveyed to a host computer or network (not shown) by way of an optical signal, radio frequency signal or other form of signal. Communication module 46 can also be used to receive images and other information from the host computer or network (not shown).

Digital signal processor 40 also creates smaller size digital images based upon the initial images. These smaller sized images are referred to herein as evaluation images. Typically, the evaluation images are lower resolution images adapted for display on viewfinder display 33 or exterior display 42. Viewfinder display 33 and exterior display 42 can comprise, for example, a color liquid crystal display (LCD), organic light emitting display (OLED) also known as an organic electroluminescent display (OELD) or other type of video display.

In an image capture sequence, digital signal processor 40 can use the initial images to generate evaluation images, archival images or both. As used herein, the term "image capture sequence" comprises at least an image composition phase and an image capture phase and can optionally also include a verification phase.

During composition, camera microprocessor 50 sends signals to a timing generator 66 indicating that images are to be captured. Timing generator 66 is connected, generally, to the elements of imaging system 20, as shown in Fig. 1, for controlling the digital conversion, compression, and storage of the image signal. Image sensor 24 is driven by timing generator 66 via a sensor driver 68.
Camera microprocessor 50, timing generator 66 and sensor driver 68 cooperate to cause image sensor 24 to collect charge in the form of light from a scene for an integration time that is either fixed or variable. After the integration time is complete, an image signal is provided to analog signal processor 34 and converted into initial images which can be used as evaluation images or archival images as is generally described above. A stream of initial images is captured in this way and digital signal processor 40 generates a stream of evaluation images based upon the initial images. The stream of evaluation images is presented on viewfinder display 33 or exterior display 42. User 4 observes the stream of evaluation images and uses the evaluation images to compose the image. The evaluation images can be created as described above using, for example, resampling techniques such as are described in commonly assigned U.S. Patent No. US-A-5,164,831 "Electronic Still Camera Providing Multi-Format Storage Of Full And Reduced Resolution Images" filed by Kuchta et al., on March 15, 1990. The evaluation images can also be stored in data memory 44.

Processing system 20 typically enters the capture phase when user 4 depresses a shutter trigger button 60. However, the capture phase can also be entered in other ways, for example in response to a timer signal or remote trigger signal. While in the capture phase, microprocessor 50 sends a capture signal causing digital signal processor 40 to select an initial image and to process the initial image to form an archival image. A corresponding evaluation image is also formed. During the verification phase, the corresponding evaluation image is supplied to viewfinder display 33 and/or exterior display 42 and is presented for a period of time. This permits user 4 to verify that the appearance of the captured archival image is acceptable.

Microprocessor 50 also associates metadata with the archival image. The metadata can comprise any other non-image data that is stored in association with the image. The metadata can include but is not limited to information such as the time, date and location that the archival image was captured, the type of image sensor 24, mode setting information, integration time information, taking lens unit setting information that characterizes the process used to capture the archival image and processes, methods and algorithms used by processing system 20 to form the archival image.

The metadata can also include any other information determined by microprocessor 50 or stored in any memory in processing system 20 such as information that identifies the processing system 20, and/or instructions for rendering or otherwise processing the captured image that can also be incorporated into the image metadata such an instruction to incorporate a particular message into the image. The metadata can further include image information such as an evaluation image or a part of an evaluation image. The metadata can also include any other information entered into or obtained by processing system 20.

In one alternative embodiment, initial images captured by image sensor 24 are captured in the form of archival images that are then modified for use as evaluation images. In another alternative embodiment, processing system 20 has more than one system for capturing images. For example, in Fig. 1 an optional additional image capture system 69 is shown. This additional image capture system 69 can be used for capturing archival images. The additional image capture system 69 can comprise an image capture system that records images using a high resolution digital imager or a photographic element such as a film or plate. Where an additional image capture system 69 is used, the images captured by image sensor 24 can be used as the evaluation images and an evaluation image corresponding to the archival image can be obtained and compared with the evaluation image obtained during image composition.

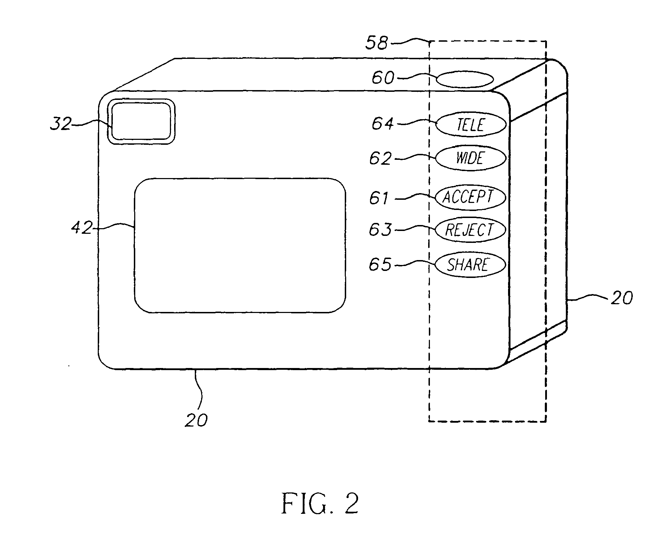

Processing system 20 is controlled by user controls 58, some of which are shown in more detail in Fig. 2. User controls 58 can comprise any form of transducer or other device capable of receiving an input from user 4 and converting this input into a form that can be used by microprocessor 50 in operating processing system 20. For example, user controls 50 can comprise a touchscreen input, a 4 way switch, a 6 way switch, an 8 way switch, a stylus system, a trackball system, joysticks system, voice recognition system, gesture recognition system or other such systems. User controls 58 include a shutter trigger button 60 that initiates a picture taking operation by sending a signal to microprocessor 50 indicating user 4's desire to capture an image. Microprocessor 50 responds to this signal by sending a capture signal to digital signal processor 40 as is generally described above. A "wide" zoom lens button 62 and a "tele" zoom lens button 64, are provided which together control both a 2:1 optical zoom and a 2:1 digital zoom feature. The optical zoom is provided by taking lens unit 22, and adjusts the magnification in order to change the field of view of the focal plane image captured by the image sensor 24. The digital zoom is provided by the digital signal processor 40, which crops and resamples the captured image stored in the frame memory 38. When user 4 first turns on processing system 20, the zoom lens is set to the 1:1 position, so that all sensor photoelements are used to provide the captured image, and the taking lens unit 22 is set to the wide angle position. In a preferred embodiment, this wide angle position is equivalent to a 40mm lens on a 35mm film camera. This corresponds to the maximum wide angle position.

When the user then depresses the "tele" zoom lens button 64, taking lens unit 22 is adjusted by microprocessor 50 via the lens driver 30 to move taking lens unit 22 towards a more telephoto focal length. If user 4 continues to depress the "tele" zoom lens button 64, the taking lens unit 22 will move to the full optical 2:1 zoom position. In a preferred embodiment, this full telephoto position is equivalent to a 40mm lens on a 35mm film camera. If user 4 continues to depress the "tele" zoom lens button 64, the taking lens unit 22 will remain in the full optical 2:1 zoom position, and digital signal processor 40 will begin to provide digital zoom, by cropping (and optionally resampling) a central area of the image. While this increases the apparent magnification of the camera, it causes a decrease in sharpness, since some of the outer photoelements of the sensor are discarded when producing the archival image. However, this decrease in sharpness would normally not be visible on the relatively small viewfinder display 33 and exterior display 42.

For example, in processing system 20 of Fig. 1, the captured image is derived from a high resolution image sensor 24, having for example 1280 x 960 photosites, corresponding to about 1.25 megapixels. The term resolution is used herein to indicate the number of picture elements used to represent the image. Exterior display 42, however, has lower resolution providing, for example, 320 x 240 elements, which correspond to about 0.08 megapixels. Thus, there are 16 times more sensor elements than display elements. Accordingly, it is necessary to resample the initial image into an evaluation image having a suitably small image size so that it can properly fit on viewfinder display 33 or exterior display 42. This resampling can be done by using low pass filtering, followed by subsampling, or by using bilinear interpolation techniques with appropriate anti-aliasing conditioning. Other techniques known in the art for adapting a high resolution image for display on a relatively low resolution display can alternatively be used.

The resampling of the captured image to produce an evaluation image having fewer pixels (i.e. lower resolution) than the captured image is performed by digital signal processor 40. As noted earlier, digital signal processor 40 can also provide digital zooming. In the maximum 2:1 setting, digital signal processor 40 uses the central 640 x 480 sensor area to provide the archival image by interpolating this central area up to 1280 x 960 samples.

Digital signal processor 40 can also modify the evaluation images in other ways so that the evaluation images match the appearance of a corresponding archival image when viewed on viewfinder display 33 or exterior display 42. These modifications include color calibrating the evaluation images so that when the evaluation images are presented on viewfinder system 32 or exterior display 42, the displayed colors of the evaluation image appear to match the colors in the corresponding archival image. These and other modifications help to provide user 4 with an accurate representation of the color, format, scene content and lighting conditions that will be present in a corresponding archival image.

As noted above, because evaluation images are displayed using an electronic display that has lower resolution than a corresponding archival image, an evaluation image may appear to be sharper when viewed through viewfinder display 33 or exterior display 42 than it will appear when the archival image is printed or otherwise displayed at higher resolution. Thus, in one optional embodiment of the present invention, each evaluation image can be modified so that areas that will appear out of focus in a corresponding archival image could appear to be out of focus when viewed on an electronic display such as exterior display 42. Moreover, when the digital zoom is active, the entire image is softened, but this softening would normally not be visible in exterior display 42. For the example in processing system 20 of Fig. 1, exterior display 42 can be a display having 320 x 240 pixels while the archival image is provided using a sensor area of 640 x 480 pixels in the maximum digital zoom setting. Thus, the evaluation image displayed on exterior display 42 after normal resizing will appear suitably sharp. However, the archival image will not produce an acceptably sharp print. Therefore, a resampling technique can be used which creates an evaluation image having 320 x 240 pixels, but having reduced apparent sharpness when the maximum digital zoom setting is used.

It will be appreciated that the apparent sharpness of a print or other tangible output that is made from the archival image is also a function of the size of the rendered image. As described in commonly assigned U.S. Patent No. US-B-7,053,953, entitled "Method and Imaging system for Blurring Portions of a Verification Image To Show Out of Focus Areas in a Captured Archival Image", filed by Belz, et al. on December 21, 2001, processing system 20 can optionally have an input (not shown) for receiving a signal indicating the expected size of the output and can adjust the apparent sharpness of the evaluation image accordingly and/or provide a warning.

As is shown in Fig. 2 user controls 58 also include a share button 65. User 4 depresses share button 65 to indicate a desire to share an archival image and/or metadata with a remote system.

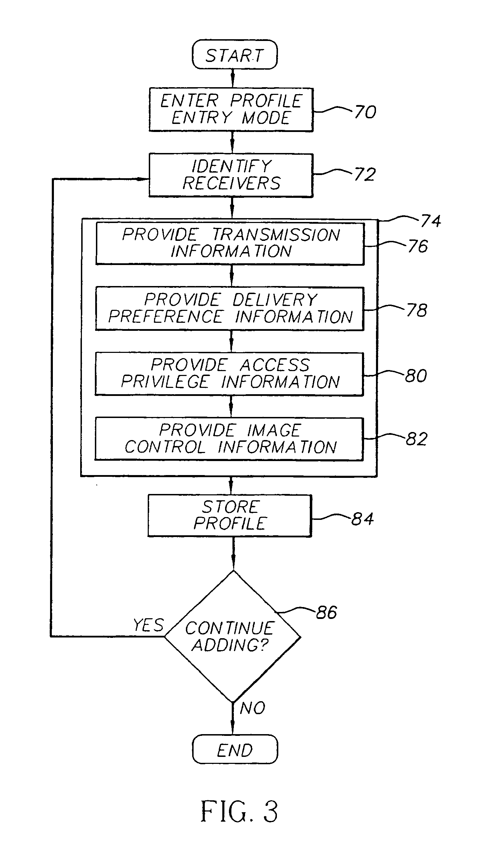

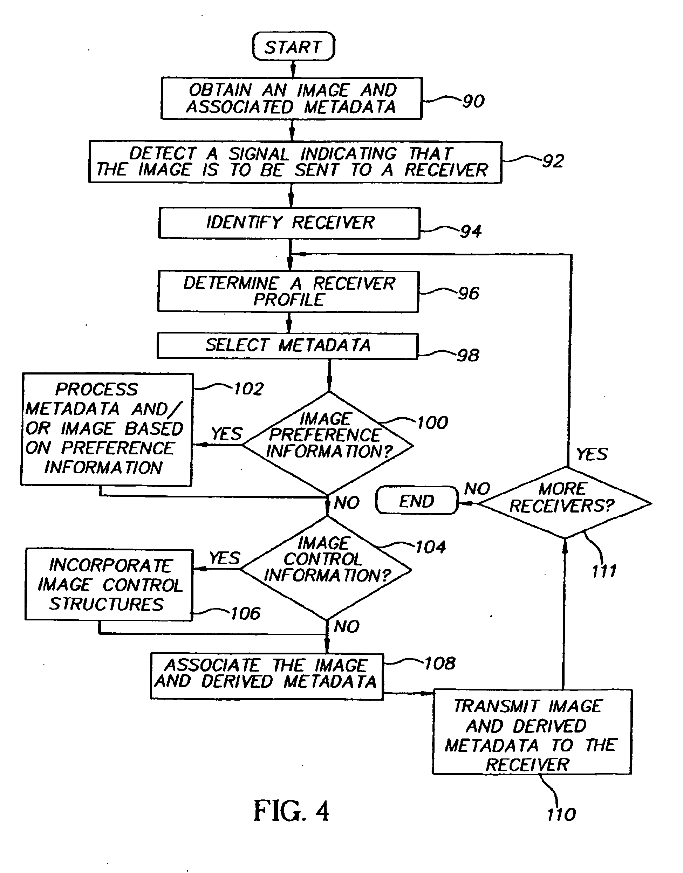

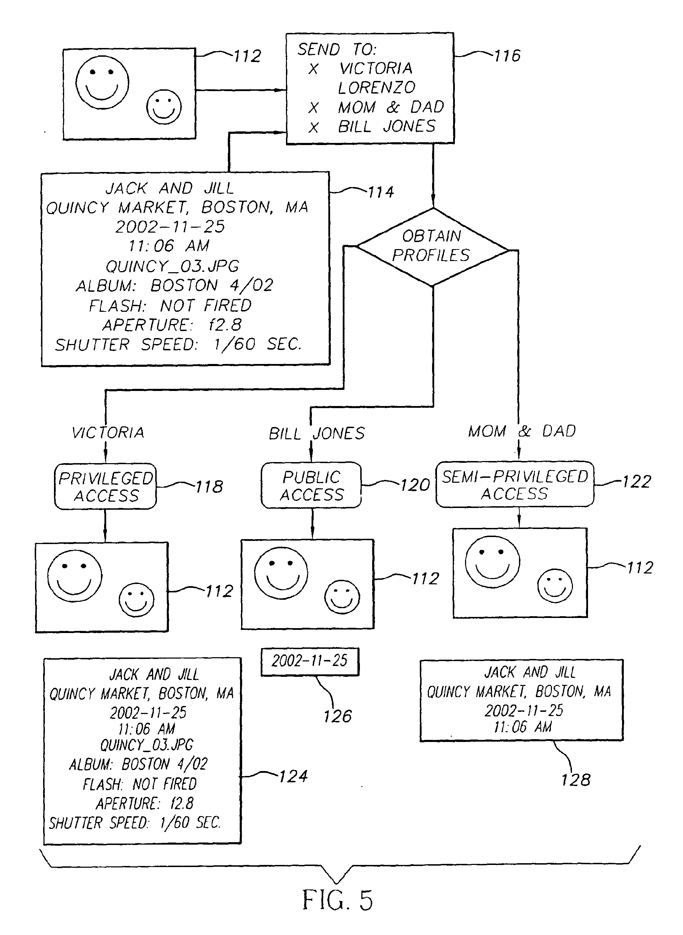

The metadata control features of processing system 20 of Figs. 1 and 2 will now be described with reference to Fig. 3, 4 and 5. Fig. 3 shows a flow diagram of an embodiment of profile entry operations. Fig. 4 shows a flow diagram of an embodiment of a method for processing image metadata. Fig. 5 illustrates operation of the method of Fig. 4. In the following description, a method will be described. However, in another embodiment, the methods described hereinafter can take the form of a computer program product for determining an area of importance in an archival image in accordance with the methods described.

The computer program product for performing the described methods can be stored in a computer readable storage medium. This medium may comprise, for example: magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program. The computer program product for performing the described methods may also be stored on a computer readable storage medium that is connected to processing system 20 by way of the internet or other communication medium (not shown). Those skilled in the art will readily recognize that the equivalent of such a computer program product can also be constructed in hardware.

In describing the following methods, it should be apparent that the computer program product embodiment can be utilized by any well-known computer system, including but not limited to the computing systems incorporated in processing system 20 described above including but not limited to microprocessor 50 of the present invention. However, many other types of computer systems can be used to execute the computer program embodiment. Consequently, the computer system will not be discussed in further detail herein.

Turning now to Fig. 3, it can be determined that profile entry operations begin when the profile entry mode is entered. The profile entry mode can be entered automatically with microprocessor 50 entering the mode automatically as a part of an initial start up operation that is executed when the image processing system 20 is used for the first time. The profile entry mode can also be entered when microprocessor 50 detects a signal at user controls 58 indicating that user 4 wishes to enter a profile for a receiver (step 70). The first step in the process is to identify each potential receiver of images (step 72). A potential receiver can be any person, location, or system to which images can be transmitted. The potential receiver can be identified for example by name, icon, image, or other visual or audio symbol or signal. For convenience, the identifier used for the receiver can be presented on a display screen such as viewfinder display 33 or exterior display 42. A profile is then developed for each receiver (step 74). The profile contains information about the receiver that can be used in processing the image metadata and digital images for sharing and in sharing the image metadata digital images.

In the embodiment of Fig. 3, transmission information is stored in the receiver profile which identifies information such as an e-mail address, phone number or other user identification number, symbol, or code that can be used by microprocessor 50 to convey the digital image using a wired or wireless telecommunications or other information transfer system to the receiver (step 76).

Optionally, the profile can include delivery preference information. (step 78) This information can be used by signal processor 40 to form a version of the digital image for transfer to a particular receiver that is adapted to conform imaging capabilities, display capabilities, or printing capabilities of a particular receiver. This can, for example, cause an digital image to be down sampled where it is known that receiver has a display device that does not have sufficient imaging resolution to show the digital image in its full resolution. The delivery preference information can also include audio, graphic, text or other messages that are to be supplied to be profile receiver. For example, such a message can comprise an annotation to be incorporated in the metadata or into the digital image indicating the source of the digital image.

Metadata access privilege information is also included in the profile (step 80). The metadata access privilege information identifies the types metadata that are to be associated with an image transmitted to a profiled receiver. For example, each profiled receiver can be assigned one of three levels of metadata access privileges with each access level entitling the receiver to receive additional or different types and amounts of metadata. In this example, all metadata associated with a digital image can be transmitted to receivers with a privileged access level. However, only a portion of the metadata associated with a digital image is shared with receivers having a semi-privileged access level. For example in the semi-privileged level, name, location, date, and time metadata can be shared. Smaller portion of the metadata associated with a digital image is shared with receivers having not privileged or public access privileges. For example, receivers with public access privileges receive only date information. Alternatively, the metadata access privileges can be defined by user 4 so that particular forms of metadata are not transmitted to a particular receiver.

The optional step of providing image control information as a part of a receiver profile can also be performed (step 82). The image control information identifies ownership, authenticity and use restrictions on the use of the image itself that are to be included in images transmitted to the profiled receiver. For example, the image control information can cause signal processor 40 to incorporate a watermark, other digital artifact, or program segment in the digital image. Such a watermark can be used to determine the source of the image or to determine whether the image has been manipulated. Alternatively, image control information can cause programming and or written instructions can be incorporated into the digital image that impose limitations on the time, place, manner or way in which the receiver can use the digital image. For example, the image control information can defines limits on the extent to which the receiver can forward, save, open, or otherwise share the digital image.

The image control information can be provided by a user 4 by way of user controls 58 or can be automatically determined by microprocessor 50 based upon the access privilege information assigned to the receiver in step 80. For example, microprocessor 50 can determine that the receiver profile is to include image control information for receivers with relatively low levels of access privileges that limit printing of the transmitted digital image.

After the profile information has been provided for the receiver, the profile information is stored. (step 84). The profile information can be stored in a memory in processing system 20 such as frame memory 38, memory card 58 or internal memory within microprocessor 50. The profile also can be located remotely from processing systems. This process can be repeated for each receiver to be profiled (step 86).

The profile information can also be entered in a group form. For example, multiple receivers can be associated in a group listing with metadata control information and other profile information assigned to the group profile. The group can be selected as a receiver of an image with a single designation in order to simplify image sharing.

Fig. 4 shows operation of processing system 20 after profile entry operations. As is shown in Fig. 4, a digital image and associated metadata are obtained. (step 90). Microprocessor 50 can obtain a digital image by capturing an archival image and storing metadata with the digital image as is described above. Microprocessor 50 can also obtain a digital image by extracting the digital image from a memory, such as memory card 56. A digital image can also be obtained using communication module 46.

After a digital image has been obtained, microprocessor 50 determines whether user 4 has a desire to share the digital image (step 92). This desire can, for example, be indicated by user 4 when user 4 depresses share button 65. When this occurs, share button 65 generates a share signal. Microprocessor 50 detects the signal from share button 65 to indicate a desire to share the digital image.

The intended receivers of the digital image are then identified (step 94). Where only one receiver has been profiled during initialization, microprocessor 50 can transmit the digital image to that receiver. However, where more than one receiver has been identified during the initialization process, user 4 designates a receiver for the image. In a simple case, user 4 can use user controls 58 to designate that the digital images are to be transmitted to all profiled receivers. Alternatively, user 4 can utilize user inputs 58 to designate that an image is to be transmitted to a particular receiver or group of receivers. The receivers can be grouped into convenient classifications such as friends, family, and work associates. This grouping can occur during initialization or at the time that the user determines to share the image. Microprocessor 50 can cause viewfinder system 32 or exterior display 42 to present a list of profiled receivers to aid user 4 in selectively picking from among the list of profiled receivers those with whom user 4 intends to share the digital image and associated metadata.

User 4 can also designate that a digital image is to be shared with the receivers for whom no profile information has yet been designated. When this occurs, microprocessor 50 can make a determination as to whether to automatically assign a level of metadata access privileges to the non-profiled receivers. For example, microprocessor 50 can provide such non-profiled receivers only with metadata that is associated with a public level of access. Where this is done, user 4 can input information that can be used override such a designation for a particular receiver. Alternatively, user 4 can define access privileges for a non-privileged receiver using controls 58. Where this is done, microprocessor 50 can also provide user 4 with the opportunity to create a profile for the receiver or to way of metadata selection for that receiver.

Although the step of designating receivers for image is described as being done after capture in the above described method, it will be appreciated that the step can be grouped formed before image capture in order to enable rapid transmission of captured images to a receiver.

Receiver profile information is then determined for each designated receiver of the digital image (step 96). The receiver profile information can be determined by accessing the profile information stored during initialization or afterward.

The metadata and, optionally, the digital image, are then processed using the profile information for anticipated transmission to the receiver. In this regard, microprocessor 50 examines the digital image to detect any metadata associated with the digital image or otherwise determines whether any metadata is associated with the digital image. Where processing system 20 is operated so that a digital image is obtained by capturing the digital image, metadata associated with the digital image can be stored in microprocessor 50 or within in some memory within processing system 20. Microprocessor 50 then derives metadata from the image metadata for transmission to each receiver (step 98). Microprocessor 50 derives for each receiver based upon the metadata access privilege information determined for that receiver. This determination can be based upon a profile for the receiver, or the determination can be automatically made by microprocessor 50 as is described above. The step of deriving the metadata can comprise selecting metadata from associated metadata for example by limiting the metadata provided to a user to some subset of the set of image metadata. The step of deriving metadata can also comprise selectively modifying or otherwise processing metadata from the image metadata based upon the access privileges. For example, access privileges may limit a time stamp for a semi-public user to general information about the time of day that an image was captured, so that while the image metadata might indicate the exact time of capture, the derived metadata will indicate that the image was captured in the afternoon.

Microprocessor 50 then determines whether the digital image is to be processed based upon delivery preference information in the profile (step 100). Where the profile for a receiver includes delivery preference information concerning an image form, microprocessor 50 can interpret this information and provide instructions to signal processor 40 for processing the digital image or for making a copy of the digital image in accordance with the image preference information so that the copy of the digital image transmitted to the receiver corresponds to the image preference information in the profile (step 102). Where the profile for a receiver includes delivery preference information such as audio or graphics graphic or text messages that are to be supplied to the profiled receiver, such messages can be incorporated in the image or metadata at this time.

Where it is determined that the receiver profile contains image control information, (step 104) microprocessor 50 or signal processor 40 can incorporate image control structures into the image or the image metadata (step 106). Examples of the image control structures including copyright indicia, trademarks, watermarks, or other visible and invisible indicia of ownership of the image. Other examples of the image control structures include image modifications, image encryption, executable code, or other structures that can limit the way in which the image is used or presented. For example, an image can include image control information that blocks presentation of some or all of the image information in the transmitted digital image unless the receiver provides a password or other indication that the receiver is entitled to view the image. Alternatively, the image control structures can provide expiration information that causes the image to become unreadable after a particular period of time has expired. In still another alternative of this type, the image control structures can selectively block printing or other use of the image. It will be appreciated that there are many ways in which image control structures can be incorporated with a digital image to govern the use transfer or other presentation of the digital image.

The digital image and the derived metadata are then associated (step 108). There are various ways in which derived metadata can be associated with a digital image to be transmitted. In a one embodiment, only the derived metadata is associated with the image. Metadata request information can be stored in association with the image. A receiver can elect to request access to metadata that the receiver believes is available in association with the digital image or that may be available in association with the digital image based upon the metadata request information. In this embodiment, when the receiver wants to access the metadata, the receiver executes a request procedure that is defined in the metadata request information. One example of such metadata request information is metadata that is associated with the digital image that identifies processing system 20 and provides metadata information from which the receiver can determine how to transmit an e-mail or other form of request to ask for this additional metadata. The metadata request information that is incorporated with the transmitted digital image can include self-executing code that transmits a request for additional metadata automatically to processing system 20.

In another alternative embodiment, all image metadata is transmitted to each receiver. However, metadata is selectively associated with certain images by selectively encrypting portions of the metadata. If a receiver desires additional metadata, the receiver can make a request that processing system 20 transmit information that will enable the receiver decode the encrypted metadata. In yet another alternative embodiment all of the metadata in an image is encrypted but with varying levels of encryption. Selected receivers are allowed to decrypt the appropriate information. If more metadata is needed, the receiver can request the ability to decrypt other information from the sender.

In a still another embodiment, the image metadata is provided but access to this metadata is limited, for example, by executable programming that permits access to additional metadata when the receiver executes a series of steps such as executing a sequence of image manipulations, or performing a series of tasks. Each task could be progressively more challenging with progressively greater access to metadata being provided to receiver to successfully execute the progressively more challenging tasks.

In a further embodiment, controller 50 causes signal processor 40 to provide information that defines active areas or so-called hot spots in the digital image. These hotspots within the digital image provide links to sources of additional metadata, which may or may not be privileged. In this embodiment, the receiver can access the hotspot and use the links to request metadata associated with that portion of the image. This allows different portions of the same image to be associated with separate sources of image metadata, with each portion having a separate access privileges associated therewith. If the information is public, processing system 20 can transmit the requested information directly to the requestor. If the information is private, the system can notify the sender of the original image and allow permission to be granted or rejected. If the information is restricted in any other way (for example a government outpost that they do not wish to be identified), then the requestor would receive a message indicating that the requested information is not available. The original image could be divided where some part of it are public, some private, and some restricted.

The digital image, or modified version of the digital image prepared for the receiver and any associated derived metadata are then transmitted to the receiver (step 110) using for example, communication module 46.

Where more than one receiver is designated to receive the image, this process repeats for each receiver (step 111). In one embodiment, where more than one receiver is combined into a group, access privilege information for each of the receivers can be combined to determine access privileges for all of the receivers. This combination can be performed in an additive manner or in a subtractive manner. In an additive manner, the profile information including access privilege information for each of the receivers is determined. When access privilege information is combined in an additive manner, access privileges are assigned to the group of receivers that correspond to the access privileges associated of most privileged receiver in the group. When access privilege information is combined in a subtractive manner, access privileges are assigned to the group of receivers to correspond to the access privileges of the least privileged member receiver in the group.

Fig. 5 shows an illustration of the operation of the method of Fig. 4. As is shown in Fig. 5, a digital image 112 and associated metadata 114 are obtained. A decision is made to send digital image 112, for example by user 4 depressing share button 65 as discussed above. In this illustration, when this occurs, processing system 20 provides a list of potential receivers 116. This list is displayed, for example, on viewfinder system 32 and/or exterior display 42. User 4 then uses user controls 58 to select Victoria, Mom & Dad, and Bill Jones as receivers of image 112. As is shown in Fig. 5, profile information is obtained for each receiver, with receiver Victoria having a privileged level of the access privileges 118, receiver Bill Jones having public level of access privileges 120 and receivers Mom & Dad having and semi-privileged level of access privileges 122.

As is shown in Fig. 5, because profile 118 for receiver Victoria indicates that Victoria has a privileged level of access privileges, a privileged set of metadata 124 containing all of the image metadata 114 is transmitted to Victoria when image 112 is transmitted to Victoria. However, because the profile 120 for receiver Bill Jones indicates that receiver Bill Jones has only a public level of access privileges, accordingly, receiver Bill Jones receives only a public set of metadata 126 having date of capture information. The profile 122 for receivers Mom & Dad, indicates that receivers Mom & Dad have a semi-privileged level of access privileges and therefore receives a semi-privileged set of metadata 128 that contains less than all of the image metadata 114. However, the semi- privileged set of metadata 128 includes more metadata than the public set 126 having subject information, identifying information, location information, and time information as well as a date information.

Although processing system 20 has been shown generally in the form of a digital still or motion image camera, it will be appreciated that processing system 20 of the present invention can be incorporated into and the methods and computer program product described herein can by used by any device that is capable of processing information and/or images examples of which include: cellular telephones, personal digital assistants, hand held and tablet computers as well as personal computers and internet appliances.

## Claims

1. A method for processing image metadata at a digital camera, the method comprising the steps of:
capturing a digital image using the digital camera;
determining image metadata for the captured digital image, said method being **characterized by**:
receiving a user input at the digital camera designating that the captured digital image is to be transmitted to at least one receiver;
determining metadata access privileges for each receiver; and, for each receiver (94/96):
deriving receiver metadata from the image metadata based upon the metadata access privileges for the receiver (98);
associating the receiver metadata with the digital image (104); and
transmitting the digital image and the receiver metadata from the digital camera used to capture the digital image to said at least one receiver (110).

2. The method of claim 1, wherein the step of deriving receiver metadata based upon the metadata access privileges comprises assigning the receiver to one of a predetermined group of receivers, with each group being associated with a set of access privileges.

3. The method of claim 1, further comprising the step of associating metadata request information that can be used by the receiver to request access to image metadata that was not transmitted to the receiver.

4. The method of claim 1, wherein the step of determining metadata access privileges for at least one receiver is **characterized by** the steps of:
identifying each receiver of the image and associated metadata;
determining a profile for each receiver with each profile having metadata access privilege information therein; and
wherein the image and the derived metadata are transmitted to each receiver so that each receiver will receive the metadata derived for that receiver when the image is transmitted to that receiver.

5. The method of claim 4, wherein the profile contains image control information defining limits on the use of an image transmitted to the receiver, and the derived metadata includes image control structures that are determined based upon the image control information; wherein the control structure limits the distribution of the image by the receiver.

6. The method of claim 1, wherein the access privileges define the types of metadata to be transmitted to a receiver.

7. The method of claim 1, further **characterized by** the step of associating executable information with the image permitting a receiver to request additional metadata.

8. The method of claim 1, wherein the step of associating the receiver metadata with the image comprises encrypting at least a part of the image metadata and associating at least some of the encrypted image metadata with the image.

9. The method of claim 1, wherein the derived metadata is associated with the image in a way that present prevents access to at least some of the metadata unless a password is provided.

10. The method of claim 1, wherein the derived metadata is associated with the image in a way that prevents access to at least some of the metadata unless a sequence of steps is performed.

## Patentansprüche

1. Verfahren zum Verarbeiten von Bild-Metadaten in einer digitalen Kamera, mit den Schritten:
Aufnehmen eines digitalen Bildes unter Verwendung der digitalen Kamera;
Bestimmen von Bild-Metadaten für das aufgenommene digitale Bild, wobei das Verfahren **gekennzeichnet ist durch** die Schritte:
Empfangen einer Benutzereingabe in der digitalen Kamera, die anzeigt, dass das aufgenommene digitale Bild zu mindestens einem Empfänger übertragen werden soll;
Bestimmen von Zugriffsprivilegien für die Metadaten für jeden Empfänger; und für jeden Empfänger (94/96)
Ableiten von Empfänger-Metadaten anhand der Bild-Metadaten auf der Grundlage der Zugriffsprivilegien für die Metadaten für den Empfänger (98);
Zuordnen der Empfänger-Metadaten zum digitalen Bild (104); und
Übertragen des digitalen Bildes und der Empfänger-Metadaten von der digitalen Kamera, die zum Aufnehmen des digitalen Bildes verwendet wurde, zum mindestens einen Empfänger (110).

2. Verfahren nach Anspruch 1, worin der Schritt des Ableitens von Empfänger-Metadaten auf der Grundlage von Zugriffsprivilegien für die Metadaten den Schritt des Zuordnens des Empfängers zu einem aus einer vorbestimmten Gruppe von Empfängern umfasst, wobei jede Gruppe einem Satz von Zugriffsprivilegien zugeordnet ist.

3. Verfahren nach Anspruch 1, mit dem Schritt des Zuordnens von Metadaten-Anforderungsinformationen, die vom Empfänger verwendbar sind, um den Zugriff auf Bild-Metadaten anzufordern, die nicht zum Empfänger übertragen worden sind.

4. Verfahren nach Anspruch 1, worin der Schritt des Bestimmens von Zugriffsprivilegien für Metadaten für mindestens einen Empfänger **gekennzeichnet ist durch** die Schritte:
Identifizieren eines jeden Empfängers des Bildes und der zugeordneten Metadaten;
Bestimmen eines Profils für jeden Empfänger, wobei jedes Profil Informationen über die Zugriffsprivilegien für die Metadaten enthält; und
worin das Bild und die abgeleiteten Metadaten zu jedem Empfänger übertragen werden, so dass jeder Empfänger die für ihn abgeleiteten Metadaten empfängt, wenn das Bild zu diesem Empfänger übertragen wird.

5. Verfahren nach Anspruch 4, worin das Profil Bildsteuerungsinformationen enthält, die Grenzen definieren bezüglich der Verwendung eines zum Empfänger übertragenen Bildes, und worin die abgeleiteten Metadaten Bildsteuerungsstrukturen aufweisen, die bestimmt werden auf der Grundlage der Bildsteuerungsinformationen, worin die Steuerungsstruktur die Verteilung des Bildes durch den Empfänger begrenzt.

6. Verfahren nach Anspruch 1, worin die Zugriffsprivilegien die Typen von Metadaten definieren, die zu einem Empfänger übertragen werden sollen.

7. Verfahren nach Anspruch 1, **gekennzeichnet durch** den Schritt des Zuordnens ausführbarer Informationen zum Bild, was es einem Empfänger erlaubt, zusätzliche Metadaten anzufordern.

8. Verfahren nach Anspruch 1, worin der Schritt des Zuordnens der Empfänger-Metadaten zum Bild die Schritte des Verschlüsselns mindestens eines Teils der Bild-Metadaten und des Zuordnens mindestens einiger der verschlüsselten Bild-Metadaten zum Bild umfasst.

9. Verfahren nach Anspruch 1, worin die abgeleiteten Metadaten dem Bild auf eine Weise zugeordnet werden, die den momentanen Zugriff auf mindestens einige der Metadaten verhindert, es sei denn, ein Passwort wird bereitgestellt.

10. Verfahren nach Anspruch 1, worin die abgeleiteten Metadaten dem Bild auf eine Weise zugeordnet werden, die den Zugriff auf mindestens einige der Metadaten verhindert, es sei denn, eine Folge von Schritten wird ausgeführt.

## Revendications

1. Procédé de traitement de métadonnées d'image au niveau d'un appareil photo numérique, le procédé comprenant les étapes de :
capture d'une image numérique en utilisant l'appareil photo numérique ;
détermination des métadonnées d'image pour l'image numérique capturée, ledit procédé étant **caractérisé par** :
la réception d'une entrée utilisateur au niveau de l'appareil photo numérique indiquant que l'image numérique capturée doit être transmise à au moins un destinataire ;
la détermination des privilèges d'accès aux métadonnées pour chaque destinataire ; et, pour chaque destinataire (94/96) :
la dérivation des métadonnées de destinataire à partir des métadonnées d'image sur la base des privilèges d'accès aux métadonnées pour le destinataire (98) ;
l'association des métadonnées de destinataire avec l'image numérique (104) ; et
la transmission de l'image numérique et des métadonnées de destinataire de l'appareil photo numérique utilisé pour capturer l'image numérique audit au moins un destinataire (110).

2. Procédé selon la revendication 1, dans lequel l'étape de dérivation des métadonnées de destinataire sur la base des privilèges d'accès aux métadonnées comprend l'affectation du destinataire à l'un des groupes prédéterminés de destinataires, chaque groupe étant associé à un ensemble de privilèges d'accès.

3. Procédé selon la revendication 1, comprenant aussi l'étape d'association des informations de demande de métadonnées pouvant être utilisées par le destinataire pour demander un accès à des métadonnées d'image qui n'ont pas été transmises au destinataire.

4. Procédé selon la revendication 1, dans lequel l'étape de détermination des privilèges d'accès aux métadonnées pour au moins un destinataire est **caractérisée par** les étapes de :
identification de chaque destinataire de l'image et des métadonnées associées ;
détermination d'un profil pour chaque destinataire, chaque profil contenant des informations de privilèges d'accès aux métadonnées ; et
dans lequel l'image et les métadonnées dérivées sont transmises à chaque destinataire de telle sorte que chaque destinataire reçoive les métadonnées dérivées pour ce destinataire lorsque l'image est transmise à ce destinataire.

5. Procédé selon la revendication 4, dans lequel le profil contient des informations de contrôle d'image définissant les limites d'utilisation d'une image transmise au destinataire, et les métadonnées dérivées contiennent des structures de contrôle d'image qui sont déterminées sur la base des informations de contrôle d'image ; dans lequel la structure de contrôle limite la diffusion de l'image par le destinataire.

6. Procédé selon la revendication 1, dans lequel les privilèges d'accès définissent les types de métadonnées devant être transmises à un destinataire.

7. Procédé selon la revendication 1, **caractérisé** aussi par l'étape d'association d'informations exécutables avec l'image permettant à un destinataire de demander des métadonnées supplémentaires.

8. Procédé selon la revendication 1, dans lequel l'étape d'association des métadonnées de destinataire avec l'image comprend le chiffrement d'au moins une partie des métadonnées d'image et l'association d'au moins une partie des métadonnées d'image chiffrées avec l'image.

9. Procédé selon la revendication 1, dans lequel les métadonnées dérivées sont associées à l'image de manière à empêcher l'accès à au moins une partie des métadonnées, à moins qu'un mot de passe ne soit fourni.

10. Procédé selon la revendication 1, dans lequel les métadonnées dérivées sont associées à l'image de manière à empêcher l'accès à au moins une partie des métadonnées, à moins qu'une séquence d'étapes ne soit réalisée.
